# EUROPÄISCHE PATENTSCHRIFT

(11) **EP 3 770 053 B1**
(45) Veröffentlichungstag und Bekanntmachung des Hinweises auf die Patenterteilung: **12.01.2022**
(21) Anmeldenummer: 20196169.5
(22) Anmeldetag: 26.09.2017
(51) Int. Cl.: B62M 6/90, B62H 5/00

(54) **BATTERIESCHLOSS FÜR EIN ELEKTROFAHRRAD**
BATTERIE LOCK FOR AN ELETRIC BICYCLE
VERROU POUR LA BATTERIE D'UN VÉLO ÉLECTRIQUE

(30) Priorität: 13.10.2016 DE 102016119570
(43) Veröffentlichungstag der Anmeldung: 27.01.2021
(62) Teilanmeldung aus: 17780340.0
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 2 423 096
- CN-A- 105 386 661
- CN-U- 202 202 658
- DE-A1-102011 083 031
- JP-A- H08 175 466

## Beschreibung

Die vorliegende Erfindung betrifft ein Fahrzeug mit einem elektrisch betriebenen Antriebsmotor, einer Batterie zur Energieversorgung des Antriebsmotors, welche durch ein Batterieschloss in einem Batteriefach des Fahrzeugs gesichert ist und nach Entriegelung des Batterieschlosses aus dem Batteriefach entnehmbar ist, und einer Steuereinheit für das Batterieschloss.

Derartige Fahrzeuge sind grundsätzlich bekannt, zum Beispiel in Form von E-Bikes oder Pedelecs. Zur Sicherung der Batterie weisen diese bekannten Fahrzeuge üblicherweise ein mechanisches Batterieschloss auf, welches mittels eines Schlüssels entriegelt werden kann.

Beispiel eines solchen Fahrzeugs wird in Dokument EP 2 423 096 A2 beschrieben, worin die Präambel des Anspruchs 1 offenbart wird.

Der Erfindung liegt die Aufgabe zugrunde, ein Fahrzeug zu schaffen, das sich durch einen höheren Bedienkomfort und eine höhere Wirtschaftlichkeit auszeichnet.

Zur Lösung der Aufgabe ist ein Fahrzeug mit den Merkmalen des Anspruchs 1 vorgesehen.

Der Erfindung liegt der allgemeine Gedanke zugrunde, das herkömmliche mechanische Batterieschloss durch ein elektrisch entriegelbares Batterieschloss zu ersetzen, wodurch auf einen physikalischen Schlüssel zur Entriegelung des Batterieschlosses verzichtet werden kann, welchen der Benutzer des Fahrzeugs stets bei sich tragen müsste und welchen er bei Bedarf unter Umständen nicht zur Hand hätte. Bei dem Fahrzeug kann es sich beispielsweise um ein Elektrofahrrad, insbesondere E-Bike oder Pedelec, ein Elektrodreirad, einen Elektrorollstuhl, ein Elektroquad oder dergleichen handeln.

Vorteilhafte Ausbildungen der Erfindung sind den Unteransprüchen, der Beschreibung und der Zeichnung zu entnehmen.

Gemäß einem Beispiel wird das Batterieschloss nach dem Einsetzen der Batterie in das Batteriefach automatisch verriegelt. Solange die Batterie am Fahrzeug montiert ist, ist der Normalzustand des Batterieschlosses also ein verriegelter. Hierdurch ist die Batterie stets zuverlässig am Fahrzeug gesichert, und der Benutzer braucht nicht an eine aktive Verriegelung des Batterieschlosses zu denken. Grundsätzlich ist aber auch eine Ausführungsform denkbar, bei welcher das Batterieschloss regelmäßig entriegelt ist und erst bei Verlassen des Fahrzeugs verriegelt wird, z.B. wenn ein Bordcomputer von dem Fahrzeug abgenommen wird.

Gemäß einem Beispiel ist die Steuereinheit in eine Motorsteuerung für den Antriebsmotor integriert. Die Entriegelung des Batterieschlosses wird letztlich also durch die Motorsteuerung gesteuert. Die für die Steuerung des Antriebsmotors ohnehin vorhandene Motorsteuerung übernimmt mit anderen Worten eine Zusatzfunktion, und es braucht keine zusätzliche eigene Steuereinheit zur Entriegelung des Batterieschlosses vorgesehen werden.

Vorteilhafterweise ist die Steuereinheit in einem Bordcomputer implementiert, welcher durch einen Benutzer abnehmbar an dem Fahrzeug angebracht ist. Da der Benutzer den Bordcomputer bei einem Verlassen des Fahrzeugs üblicherweise mit sich nimmt, ist gewährleistet, dass Unbefugte das Batterieschloss zumindest nicht ohne kriminell tätig zu werden entriegeln und die Batterie entwenden können.

Gemäß einem Beispiel umfasst der Bordcomputer ein durch einen Benutzer betätigbares Eingabemittel zur Entriegelung des Batterieschlosses. Bei diesem Eingabemittel kann es sich beispielsweise um einen Druck- oder Schiebeschalter handeln. Alternativ kann der Bordcomputer über einen Touchscreen oder ein Mikrophon verfügen, über den bzw. das ein entsprechender Entriegelungsbefehl eingegeben werden kann.

Anstatt in die Motorsteuerung integriert zu sein, kann die Steuereinheit auch in das Batterieschloss integriert sein. In diesem Fall ist das Batterieschloss also mit einer eigenen, insbesondere von der Motorsteuerung unabhängigen, Steuereinheit versehen und dementsprechend autark. Gleichwohl ist es vorteilhaft, wenn die in das Batterieschloss integrierte Steuereinheit mit einem Bordcomputer des Fahrzeugs verbunden ist, da die Steuereinheit auf diese Weise mit dem Bordcomputer kommunizieren kann, beispielsweise um ein die Entriegelung des Batterieschlosses erlaubendes Freigabesignal oder erfindungsgemäß ein den Bewegungszustand des Fahrzeugs angebendes Signal von diesem zu erhalten oder ein den Verriegelungszustand des Batterieschlosses angebendes Signal an den Bordcomputer zu übermitteln. Insbesondere wenn die Steuereinheit in das Batterieschloss integriert ist, verfügt das Batterieschloss bevorzugt über ein durch einen Benutzer, insbesondere manuell, betätigbares Bedienelement zur Entriegelung des Batterieschlosses. In diesem Fall erfolgt die Entriegelung des Batterieschlosses also nicht über eine Eingabe an dem Bordcomputer, sondern stattdessen durch Betätigung des Bedienelements am Batterieschloss. Bei dem Bedienelement kann es sich beispielsweise um einen Druck- oder Schiebeschalter handeln oder auch um einen kapazitiven Sensor, der z.B. die Anwesenheit eines Fingers des Benutzers detektieren kann. Grundsätzlich kann das Batterieschloss ein solches manuell betätigbares Bedienelement aber auch dann aufweisen, wenn die Steuereinheit in dem Bordcomputer implementiert ist.

In beiden Fällen wird ein höherer Diebstahlschutz erreicht, wenn die Steuereinheit eine Entriegelung des Batterieschlosses mittels des Bedienelements nur solange zulässt, wie der Bordcomputer an dem Fahrzeug angebracht ist. Die Entriegelung des Batterieschlosses mittels des Bedienelements setzt somit auch hier voraus, dass sich der Bordcomputer am Fahrzeug befindet. Anders gesagt ist eine, insbesondere unbefugte, Entriegelung des Batterieschlosses durch das Bedienelement dann ausgeschlossen, wenn der rechtmäßige Benutzer das Fahrzeug verlassen und den Bordcomputer mit sich genommen hat.

Gemäß einem weiteren Beispiel weist das Fahrzeug ein elektrisch verriegelbares Rahmenschloss auf, welches durch Abnahme eines Bordcomputers von dem Fahrzeug elektrisch verriegelbar ist.

Dabei ist es vorteilhaft, wenn die Steuereinheit eine Entriegelung des Batterieschlosses nur dann zulässt, wenn das Rahmenschloss verriegelt ist. Da die elektrische Verriegelung des Rahmenschlosses eine Versorgung mit elektrischer Energie durch die Batterie voraussetzt, ist durch diese Steuerabfolge sichergestellt, dass die Batterie nicht vorzeitig aus dem Batteriefach entnommen und die Versorgung des Rahmenschlosses mit elektrischer Energie unterbrochen werden kann, bevor das Rahmenschloss verriegelt ist.

Alternativ oder zusätzlich kann die Steuereinheit eine Entriegelung des Batterieschlosses blockieren, solange das Fahrzeug in Bewegung ist. Auf diese Weise wird eine unbeabsichtigte Entriegelung des Batterieschlosses während der Fahrt verhindert, die unter Umständen zu einem Herausfallen der Batterie aus dem Batteriefach führen könnte.

Beispielsweise kann der Bordcomputer Daten von einem Bewegungssensor, Lagesensor, Geschwindigkeitssensor und/oder Trittfrequenzsensor des Fahrzeugs empfangen, aus diesen Daten ermitteln, ob das Fahrzeug in Bewegung ist, und ein den Bewegungszustand des Fahrzeugs angebendes Signal an die Steuereinheit übermitteln.

Vorzugsweise umfasst das Batterieschloss einen Riegel, welcher in einer Verriegelungsstellung die in dem Batteriefach aufgenommene Batterie verriegelt und welcher durch einen elektrischen Antrieb in eine Entriegelungsstellung bringbar ist, in welcher der Riegel die in dem Batteriefach aufgenommene Batterie freigibt. Um beim Einsetzen der Batterie in das Batteriefach die Batterie automatisch und insbesondere stromlos verriegeln zu können, ist der Riegel bevorzugt durch eine Feder in seine Verriegelungsstellung vorgespannt. Denkbar ist aber auch eine Ausführungsform, bei welcher entsprechend der Entriegelung auch die Verriegelung elektrisch erfolgt.

Ist das Batterieschloss rahmenseitig angeordnet, beispielsweise in das Batteriefach integriert oder davon getrennt an einem Rahmen des Fahrzeugs angebracht, so kann der Riegel gemäß einer Variante in seiner Verriegelungsstellung in eine Riegelaufnahme der in dem Batteriefach aufgenommenen Batterie eingreifen. Die Riegelaufnahme der Batterie kann zum Beispiel in einem die Batterie umgebenden Batteriegehäuse ausgebildet sein.

Umgekehrt ist es auch möglich, das Batterieschloss batterieseitig anzuordnen und insbesondere in ein die Batterie umgebendes Batteriegehäuse zu integrieren. In diesem Fall würde der Riegel bei in das Batteriefach eingesetzter Batterie in seiner Verriegelungsstellung in eine rahmenseitig vorgesehene Riegelaufnahme eingreifen, welche beispielsweise in das Batteriefach integriert ist oder davon getrennt an dem Rahmen des Fahrzeugs ausgebildet ist.

Gemäß einer alternativen Variante blockiert der Riegel einen Hebel, durch welchen die Batterie aus dem Batteriefach heraus hebelbar ist. Im Falle eines rahmenseitig angeordneten Batterieschlosses wirkt der Riegel in seiner Verriegelungsstellung also indirekt mit der in dem Batteriefach aufgenommenen Batterie zusammen. Auch bei dieser Variante ist es grundsätzlich vorstellbar, das Batterieschloss batterieseitig anzuordnen und insbesondere in ein die Batterie umgebendes Batteriegehäuse zu integrieren und, wenn die Batterie in das Batteriefach eingesetzt ist, mittels eines Riegels des Batterieschlosses einen Hebel zu blockieren, durch welchen die Batterie aus dem Batteriefach heraus hebelbar ist.

Der elektrische Antrieb für den Riegel kann beispielsweise einen Elektromotor und einen Exzenter umfassen, welcher zwischen den Elektromotor und den Riegel geschaltet ist.

Alternativ kann der elektrische Antrieb einen elektromagnetischen Aktuator umfassen, zum Beispiel kann der Riegel aus einem magnetischen Material gebildet sein und einen von einer Spule umgebenen Anker bilden.

Abschließend sei darauf hingewiesen, dass alternativ oder zusätzlich zu dem Batterieschloss auch ein anderes elektrisch entriegelbares Schloss des Fahrzeugs, durch welches zum Beispiel ein Aufbewahrungsfach, Behälter oder Koffer des Fahrzeugs verriegelbar ist oder durch welches ein anderes Zubehörteil am Fahrzeug sicherbar ist, auf die voranstehend beschriebene Art und Weise ausgebildet und gesteuert sein kann, insbesondere elektrisch entriegelt werden kann.

Nachfolgend wird die Erfindung unter Bezugnahme auf die beigefügte Zeichnung rein beispielhaft anhand einer möglichen Ausführungsform beschrieben.

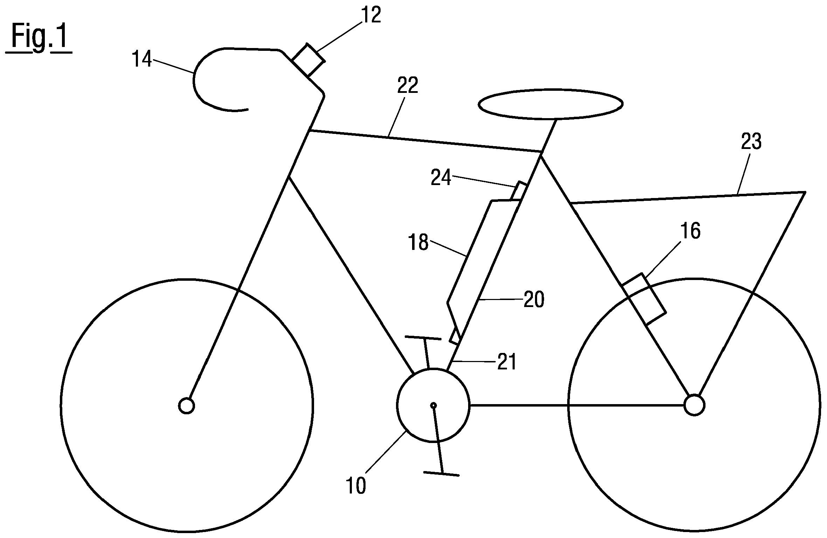

- Fig. 1: zeigt ein erfindungsgemäßes Fahrzeug.

Bei dem in Fig. 1 gezeigten Fahrzeug handelt es sich um ein Elektrofahrrad, beispielsweise ein E-Bike oder ein Pedelec, welches mit einem elektrischen Antriebsmotor 10 ausgestattet ist. Im vorliegenden Ausführungsbeispiel ist der Antriebsmotor 10 im Bereich eines Tretlagers des Fahrzeugs angeordnet. Es ist aber ebenso möglich, den Antriebsmotor 10 an einer Vorderradnabe oder einer Hinterradnabe des Fahrzeugs anzubringen.

Zur Steuerung des Antriebsmotors 10 ist eine Steuereinheit vorgesehen, die in einem Bordcomputer 12 implementiert ist, welcher im Bereich eines Lenkers 14 des Fahrzeugs angebracht ist und von einem Benutzer des Fahrzeugs beim Verlassen des Fahrzeugs abgenommen werden kann.

Das Fahrzeug verfügt ferner über ein elektrisches Rahmenschloss 16, welches ebenfalls durch die Steuereinheit gesteuert wird. Konkret ist die Steuereinheit so konfiguriert, dass sie automatisch eine Verriegelung des Rahmenschlosses 16 auslöst, wenn der Bordcomputer 12 vom Fahrzeug abgenommen wird.

Zur Versorgung sowohl des Antriebsmotors 10 als auch des Rahmenschlosses 16 mit elektrischer Energie ist eine Batterie 18 vorgesehen, welche in einem Batteriefach 20 aufgenommen ist, das an einem Sitzrohr 21 eines Rahmens 22 des Fahrzeugs ausgebildet ist. Alternativ ist es möglich, die Batterie 18 und das Batteriefach 20 in einen Gepäckträger 23 des Fahrzeugs zu integrieren.

Die Batterie 18 verfügt über einen nicht gezeigten Stromanschluss, welcher ein Aufladen der Batterie 18 direkt am Fahrzeug ermöglicht. Darüber hinaus kann die Batterie 18 zu Wartungs- oder Austauschzwecken oder für ein vom Fahrzeug entferntes Aufladen aus dem Batteriefach 20 entnommen werden.

Um eine unbefugte Entnahme und ein unbeabsichtigtes Herausfallen der Batterie 18 aus dem Batteriefach 20 zu verhindern, ist ein Batterieschloss 24 vorgesehen, welches die Batterie 18 in dem Batteriefach 20 sichert. Im vorliegenden Ausführungsbeispiel ist das Batterieschloss 24 in das Batteriefach 20 integriert und so ausgebildet, dass es automatisch einen verriegelten Zustand einnimmt, sobald die Batterie 18 in das Batteriefach 20 eingesetzt wird, beispielsweise indem ein nicht dargestellter und durch eine Feder vorgespannter Riegel in eine Rastvertiefung der Batterie 18 oder eines Batteriegehäuses einrastet oder einen beim Einsetzen der Batterie 18 verschwenkten Hebel blockiert. Auf diese Weise ist die in dem Batteriefach 20 aufgenommene Batterie 18 normal durch das verriegelte Batterieschloss 24 gesichert.

Die Entriegelung des Batterieschlosses 24 erfolgt elektrisch. Hierzu umfasst das Batterieschloss 24 einen elektrischen Antrieb, durch welchen der Riegel zumindest vorübergehend entgegen der Rückstellkraft der Feder in eine die Batterie 18 freigebende Entriegelungsstellung bringbar ist. Beispielsweise kann der elektrische Antrieb einen Elektromotor und einen Exzenter umfassen, welcher zwischen den Elektromotor und den Riegel geschaltet ist. Alternativ kann der elektrische Antrieb einen elektromagnetischen Aktuator umfassen, zum Beispiel kann der Riegel aus einem magnetischen Material gebildet sein und einen von einer Spule umgebenen Anker bilden.

Zur Steuerung des Batterieschlosses 24 ist die in dem Bordcomputer 12 implementierte Steuereinheit vorgesehen, welche auch den Antriebsmotor 10 und das Rahmenschloss 16 steuert. Im vorliegenden Ausführungsbeispiel wird die Entriegelung des Batterieschlosses 24 durch eine Benutzereingabe am Bordcomputer 12 ausgelöst, beispielsweise indem der Benutzer eine entsprechende Taste am Bordcomputer 12 drückt. Alternativ ist aber auch eine Ausführungsform denkbar, bei welcher am Batterieschloss 24 selbst eine entsprechende Entriegelungstaste vorgesehen ist und die Steuereinheit lediglich ein Freigabesignal an das Batterieschloss 24 ausgibt, welches Voraussetzung für eine Aktivierung der Entriegelungstaste ist. In beiden Fällen lässt sich das Batterieschloss 24 nur dann entriegeln, wenn der Bordcomputer 12 am Fahrzeug angebracht ist, so dass eine unbefugte Entriegelung und Entnahme der Batterie 18 bei abgenommenem Bordcomputer 12 unmöglich oder zumindest erschwert ist.

Da das Rahmenschloss 16 für seine Verriegelung auf die Versorgung mit Energie durch die Batterie 18 angewiesen ist, ist die Steuereinheit so konfiguriert, dass sie bei einer Abnahme des Bordcomputers 12 eine Verriegelung des Rahmenschlosses 16 auslöst, bevor das Batterieschloss 24 entriegelt wird. Auf diese Weise wird verhindert, dass das Rahmenschloss 16 nicht mehr verriegeln kann, weil die Batterie 18 aus dem Batteriefach 20 entnommen ist.

Ferner ist die Steuereinheit derart konfiguriert, dass sie eine Verriegelung des Rahmenschlosses 16 solange blockiert, wie das Fahrzeug in Bewegung ist. Die Steuereinheit empfängt hierfür Daten von wenigstens einem geeigneten am Fahrzeug vorgesehenen Sensor (nicht gezeigt), z.B. einem Bewegungssensor, Lagesensor, Geschwindigkeitssensor und/oder Trittfrequenzsensor, und ermittelt aus diesen Daten den Bewegungszustand des Fahrzeugs. Dasselbe Kriterium verwendet die Steuereinheit auch für das Batterieschloss 24, um zu verhindern, dass das Batterieschloss 24 versehentlich während der Fahrt entriegelt wird.

### Bezugszeichenliste

- 10: Antriebsmotor
- 12: Bordcomputer
- 14: Lenker
- 16: Rahmenschloss
- 18: Batterie
- 20: Batteriefach
- 21: Sitzrohr
- 22: Rahmen
- 23: Gepäckträger
- 24: Batterieschloss

## Patentansprüche

1. Elektrofahrrad mit einem elektrisch betriebenen Antriebsmotor (10), einer Batterie (18) zur Energieversorgung des Antriebsmotors (10), welche durch ein elektrisch entriegelbares Batterieschloss (24) in einem Batteriefach (20) des Elektrofahrrads gesichert ist und nach Entriegelung des Batterieschlosses (24) aus dem Batteriefach (20) entnehmbar ist, und einer Steuereinheit für das Batterieschloss (24),
**dadurch gekennzeichnet dass**
die Steuereinheit eine Entriegelung des Batterieschlosses (24) blockiert, solange das Elektrofahrrad in Bewegung ist.

2. Elektrofahrrad nach Anspruch 1,
**dadurch gekennzeichnet, dass**
das Batterieschloss (24) nach dem Einsetzen der Batterie (18) in das Batteriefach (20) automatisch verriegelt.

3. Elektrofahrrad nach Anspruch 1 oder 2,
**dadurch gekennzeichnet, dass**
die Steuereinheit in eine Motorsteuerung für den Antriebsmotor (10) integriert ist.

4. Elektrofahrrad nach zumindest einem der vorstehenden Ansprüche,
**dadurch gekennzeichnet, dass**
die Steuereinheit in einem Bordcomputer (12) implementiert ist, welcher durch einen Benutzer abnehmbar an dem Elektrofahrrad angebracht ist.

5. Elektrofahrrad nach Anspruch 4,
**dadurch gekennzeichnet, dass**
der Bordcomputer (12) ein durch einen Benutzer betätigbares Eingabemittel zur Entriegelung des Batterieschlosses (24) aufweist.

6. Elektrofahrrad nach Anspruch 1 oder 2,
**dadurch gekennzeichnet, dass**
die Steuereinheit in das Batterieschloss (24) integriert ist.

7. Elektrofahrrad nach zumindest einem der vorstehenden Ansprüche,
**dadurch gekennzeichnet, dass**
das Batterieschloss (24) über ein durch einen Benutzer, insbesondere manuell, betätigbares Bedienelement zur Entriegelung des Batterieschlosses (24) verfügt.

8. Elektrofahrrad nach Anspruch 7,
**dadurch gekennzeichnet, dass**
die Steuereinheit eine Entriegelung des Batterieschlosses (24) mittels des Bedienelements nur solange zulässt, wie ein Bordcomputer (12) an dem Elektrofahrrad angebracht ist.

9. Elektrofahrrad nach zumindest einem der vorstehenden Ansprüche,
**dadurch gekennzeichnet , dass**
das Elektrofahrrad ein elektrisch verriegelbares Rahmenschloss (16) aufweist, welches durch Abnahme eines Bordcomputers (12) von dem Elektrofahrrad elektrisch verriegelbar ist,
insbesondere wobei die Steuereinheit eine Entriegelung des Batterieschlosses (24) nur dann zulässt, wenn das Rahmenschloss (16) verriegelt ist.

10. Elektrofahrrad nach zumindest einem der vorstehenden Ansprüche, **dadurch gekennzeichnet, dass**
ein Bordcomputer (12) des Elektrofahrrads Daten von einem Bewegungssensor, Lagesensor, Geschwindigkeitssensor und/oder Trittfrequenzsensor des Elektrofahrrads empfängt, aus diesen Daten ermittelt, ob das Elektrofahrrad in Bewegung ist, und ein den Bewegungszustand des Elektrofahrrads angebendes Signal an die Steuereinheit übermittelt.

11. Elektrofahrrad nach zumindest einem der vorstehenden Ansprüche, **dadurch gekennzeichnet, dass**
das Batterieschloss (24) einen Riegel umfasst, welcher in einer Verriegelungsstellung die in dem Batteriefach (20) aufgenommene Batterie (18) verriegelt und welcher durch einen elektrischen Antrieb in eine Entriegelungsstellung bringbar ist, in welcher der Riegel die in dem Batteriefach (20) aufgenommene Batterie (18) freigibt, insbesondere wobei der Riegel durch eine Feder in seine Verriegelungsstellung vorgespannt ist.

12. Elektrofahrrad nach Anspruch 11,
**dadurch gekennzeichnet, dass**
das Batterieschloss (24) rahmenseitig angeordnet ist und der Riegel in seiner Verriegelungsstellung in eine Riegelaufnahme der in dem Batteriefach (20) aufgenommenen Batterie (18) eingreift; oder
das Batterieschloss (24) batterieseitig angeordnet ist und der Riegel bei in dem Batteriefach (20) aufgenommener Batterie (18) in seiner Verriegelungsstellung in eine rahmenseitig ausgebildete Riegelaufnahme eingreift.

13. Elektrofahrrad nach Anspruch 11,
**dadurch gekennzeichnet, dass**
der Riegel in seiner Verriegelungsstellung einen Hebel blockiert, durch welchen die Batterie (18) aus dem Batteriefach (20) heraus hebelbar ist.

14. Elektrofahrrad nach zumindest einem der Ansprüche 11 bis 13,
**dadurch gekennzeichnet , dass**
der elektrische Antrieb einen Elektromotor und einen Exzenter umfasst, welcher zwischen den Elektromotor und den Riegel geschaltet ist; oder der elektrische Antrieb einen elektromagnetischen Aktuator umfasst.

## Claims

1. An electric bicycle having an electrically operated drive motor (10), having a battery (18) for the energy supply of the drive motor (10), the battery (18) being secured in a battery compartment (20) of the electric bicycle by an electrically unlockable battery lock (24) and being removable from the battery compartment (20) after unlocking the battery lock (24), and having a control unit for the battery lock (24),
**characterized in that**
the control unit blocks an unlocking of the battery lock (24) as long as the electric bicycle is in motion.

2. An electric bicycle in accordance with claim 1,
**characterized in that**
the battery lock (24) locks automatically after the insertion of the battery (18) into the battery compartment (20).

3. An electric bicycle in accordance with claim 1 or claim 2,
**characterized in that**
the control unit is integrated into a motor control for the drive motor (10).

4. An electric bicycle in accordance with at least one of the preceding claims, **characterized in that**
the control unit is implemented in an onboard computer (12) which is attached to the electric bicycle in a manner removable by a user.

5. An electric bicycle in accordance with claim 4,
**characterized in that**
the onboard computer (12) has an input means actuable by a user to unlock the battery lock (24).

6. An electric bicycle in accordance with claim 1 or claim 2,
**characterized in that**
the control unit is integrated into the battery lock (24).

7. An electric bicycle in accordance with at least one of the preceding claims, **characterized in that**
the battery lock (24) has an operating element which is actuable by a user, in particular manually, for unlocking the battery lock (24).

8. An electric bicycle in accordance with claim 7,
**characterized in that**
the control unit only permits an unlocking of the battery lock (24) by means of the operating element as long as an onboard computer (12) is attached to the electric bicycle.

9. An electric bicycle in accordance with at least one of the preceding claims, **characterized in that**
the electric bicycle has an electrically lockable frame lock (16) which is electrically lockable by removing an onboard computer (12) from the electric bicycle,
in particular with the control unit only permitting an unlocking of the battery lock (24) when the frame lock (16) is locked.

10. An electric bicycle in accordance with at least one of the preceding claims, **characterized in that**
an onboard computer (12) of the electric bicycle receives data from a motion sensor, positional sensor, speed sensor and/or pedaling frequency sensor of the electric bicycle, determines whether the electric bicycle is in motion from these data, and transmits a signal indicating the movement state of the electric bicycle to the control unit.

11. An electric bicycle in accordance with at least one of the preceding claims, **characterized in that**
the battery lock (24) comprises a latch which locks the battery (18) received in the battery compartment (20) in a locked position and which can be brought by an electric drive into an unlocked position in which the latch releases the battery (18) received in the battery compartment (20), in particular wherein the latch is preloaded into its locked position by a spring.

12. An electric bicycle in accordance with claim 11,
**characterized in that**
the battery lock (24) is arranged at the frame side and the latch engages in its locked position into a latch receiver of the battery (18) received in the battery compartment (20); or
**in that** the battery lock (24) is arranged at the battery side and the latch engages in its locked position into a latch receiver formed at the frame side with a battery (18) received in the battery compartment (20).

13. An electric bicycle in accordance with claim 11,
**characterized in that**
the latch in its locked position blocks a lever by which the battery (18) can be levered out of the battery compartment (20).

14. An electric bicycle in accordance with at least one of the claims 11 to 13, **characterized in that**
the electric drive comprises an electric motor and an eccentric member which is connected between the electric motor and the latch; or
**in that** the electric drive comprises an electromagnetic actuator.

## Revendications

1. Vélo électrique comportant un moteur d'entraînement (10) à commande électrique, une batterie (18) pour l'alimentation en énergie du moteur d'entraînement (10), qui est bloquée dans un compartiment à batterie (20) du vélo électrique par un antivol de batterie (24) déverrouillable électriquement et qui peut être retirée hors du compartiment à batterie (20) après déverrouillage de l'antivol de batterie (24), et une unité de commande pour l'antivol de batterie (24),
**caractérisé en ce que**
l'unité de commande s'oppose à un déverrouillage de l'antivol de batterie (24) tant que le vélo électrique est en mouvement.

2. Vélo électrique selon la revendication 1,
**caractérisé en ce que**
l'antivol de batterie (24) se verrouille automatiquement après l'insertion de la batterie (18) dans le compartiment à batterie (20).

3. Vélo électrique selon la revendication 1 ou 2,
**caractérisé en ce que**
l'unité de commande est intégrée dans une commande de moteur pour le moteur d'entraînement (10).

4. Vélo électrique selon l'une au moins des revendications précédentes, **caractérisé en ce que**
l'unité de commande est mise en œuvre dans un ordinateur de bord (12) qui est monté sur le vélo électrique de manière à pouvoir être détaché par un utilisateur.

5. Vélo électrique selon la revendication 4,
**caractérisé en ce que**
l'ordinateur de bord (12) comporte un moyen de saisie actionnable par un utilisateur pour déverrouiller l'antivol de batterie (24).

6. Vélo électrique selon la revendication 1 ou 2,
**caractérisé en ce que**
l'unité de commande est intégrée dans l'antivol de batterie (24).

7. Vélo électrique selon l'une au moins des revendications précédentes, **caractérisé en ce que**
l'antivol de batterie (24) dispose d'un élément de manipulation actionnable par un utilisateur, en particulier manuellement, pour déverrouiller l'antivol de batterie (24).

8. Vélo électrique selon la revendication 7,
**caractérisé en ce que**
l'unité de commande n'autorise un déverrouillage de l'antivol de batterie (24) au moyen de l'élément de commande que tant qu'un ordinateur de bord (12) est monté sur le vélo électrique.

9. Vélo électrique selon l'une au moins des revendications précédentes, **caractérisé en ce que**
le vélo électrique comporte un antivol de cadre (16) verrouillable électriquement, qui peut être verrouillé électriquement par détachement d'un ordinateur de bord (12) depuis le vélo électrique, et
en particulier, l'unité de commande n'autorise un déverrouillage de l'antivol de batterie (24) que lorsque l'antivol de cadre (16) est verrouillé.

10. Vélo électrique selon l'une au moins des revendications précédentes, **caractérisé en ce que**
un ordinateur de bord (12) du vélo électrique reçoit des données d'un capteur de mouvement, d'un capteur de position, d'un capteur de vitesse et/ou d'un capteur de cadence du vélo électrique, détermine à partir de ces données si le vélo électrique est en mouvement, et transmet à l'unité de commande un signal indiquant l'état de mouvement du vélo électrique.

11. Vélo électrique selon l'une au moins des revendications précédentes, **caractérisé en ce que**
l'antivol de batterie (24) comprend un verrou qui, dans une position de verrouillage, verrouille la batterie (18) logée dans le compartiment à batterie (20) et qui peut être amené par un entraînement électrique jusque dans une position de déverrouillage dans laquelle le verrou libère la batterie (18) logée dans le compartiment à batterie (20), le verrou étant en particulier précontraint vers sa position de verrouillage par un ressort.

12. Vélo électrique selon la revendication 11,
**caractérisé en ce que**
l'antivol de batterie (24) est disposé du côté cadre, et le verrou, dans sa position de verrouillage, s'engage dans un logement de verrou de la batterie (18) logée dans le compartiment à batterie (20) ; ou
l'antivol de batterie (24) est disposé du côté batterie et, lorsque la batterie (18) est logée dans le compartiment à batterie (20), le verrou, dans sa position de verrouillage, s'engage dans un logement de verrou réalisé du côté cadre.

13. Vélo électrique selon la revendication 11,
**caractérisé en ce que** le verrou, dans sa position de verrouillage, bloque un levier par lequel la batterie (18) peut être enlevée par effet de levier hors du compartiment à batterie (20).

14. Vélo électrique selon l'une au moins des revendications 11 à 13, **caractérisé en ce que**
l'entraînement électrique comprend un moteur électrique et un excentrique qui est intercalé entre le moteur électrique et le verrou ; ou l'entraînement électrique comprend un actionneur électromagnétique.
